# EUROPÄISCHE PATENTANMELDUNG

(11) **EP 1 147 932 A1**
(43) Veröffentlichungstag der Anmeldung: **24.10.2001**
(21) Anmeldenummer: 01108791.3
(22) Anmeldetag: 07.04.2001
(51) Int. Cl.: B60J 7/00

(54) **Sonnenschutzeinrichtung für ein transparentes Fahrzeugteil und Fahrzeugdach mit Sonnenschutzeinrichtung**

(30) Priorität: 19.04.2000 DE 10019664
(71) Anmelder: Webasto Vehicle Systems International GmbH, 82131 Stockdorf (DE)
(72) Erfinder: Wingen, Bernhard, 83620 Feldkirchen (DE); Seifert, Wolfgang, 92339 Beilngries (DE)
(74) Vertreter: Konnerth, Dieter Hans

(57) **Zusammenfassung**

Die Erfindung betrifft eine Sonnenschutzeinrichtung (5) für ein transparentes Fahrzeugteil, insbesondere für ein Fahrzeugdach mit einem transparenten Dachabschnitt (2), wobei die Sonnenschutzeinrichtung (5) zumindest ein an dem Fahrzeugteil bzw. unter dem Dachabschnitt (2) angeordnetes und zu einem Vorderrand (9) oder zu einem Hinterrand (13) des Fahrzeugteils bzw. eines Dachausschnitts (14) ausfahrbares Sonnenschutzelement (5) enthält, das in Fahrzeuglängsrichtung verschiebbar gelagert ist, wobei das Sonnenschutzelement (5) sowohl in einer zumindest teilweise ausgefahrenen Stellung wie auch in einer eingefahrenen Stellung verschiebbar ist.

## Beschreibung

Die Erfindung betrifft eine Sonnenschutzeinrichtung für ein transparentes Fahrzeugteil, insbesondere für ein Fahrzeugdach mit einem transparenten Dachabschnitt, wobei die Sonnenschutzeinrichtung zumindest ein an dem Fahrzeugteil bzw. unter dem Dachabschnitt angeordnetes und zu einem Vorderrand oder zu einem Hinterrand des Fahrzeugteils bzw. eines Dachausschnitts ausfahrbares Sonnenschutzelement enthält, das in Fahrzeuglängsrichtung verschiebbar gelagert ist, sowie ein Fahrzeugdach mit einer derartigen Sonnenschutzeinrichtung.

Bekannt ist eine Anordnung von zwei fest eingebauten Rollos, die in etwa in der Mitte unterhalb eines Glasdaches angeordnet sind und nach vorne bzw. nach hinten ausfahrbar sind. Auch wenn die Rollos nicht benutzt werden und insbesondere bei geöffnetem Dach, wenn der Deckel nach hinten verschoben ist, sind diese Rollos quer über die Dachöffnung angeordnet und beeinträchtigen die Sicht.

Aus der DE 197 50 713 C1 ist ein Fahrzeugdach mit zumindest einem transparenten Dachteil bekannt geworden, unter dem eine Abdeckvorrichtung angeordnet ist. Die Abdeckvorrichtung enthält gemäß einem Ausführungsbeispiel zwei ausziehbare Rollos, deren Wickelwellen am Fahrzeug in Dachlängsrichtung verschiebbar gelagert sind, während die Enden der beiden Rollobahnen am Vorderende bzw. am Hinterende des transparenten Dachteils fest angebracht sind. Die beiden Wickelwellen sind durch einen Koppelmechanismus derart miteinander verbunden, daß eine Verschiebebewegung der einen Wickelwelle eine entsprechende gegenläufige Verschiebebewegung der anderen Wickelwelle erzeugt, so daß durch eine Betätigung oder Bedienung nur eines der beiden Rollos die Abdeckvorrichtung bzw. die beiden Rollos ausgehend von der Dachmitte gleichmäßig geöffnet werden können. Die Verschiebestellung der beiden Wickelwellen bestimmt somit die Öffnung der Abdeckvorrichtung, wobei die Verschiebebewegung der Wickelwellen stets ein Aus- und Einfahren des jeweiligen Rollos zur Folge hat. Eine Positionsveränderung des aufgerollten geöffneten Rollos durch Verschieben entlang dem Fahrzeugdach ist nicht vorgesehen.

Aus der DE 44 24 188 C1 ist eine Rolloanordnung zum Abschirmen eines durchsichtigen Dachbereichs von Fahrzeugen bekannt geworden. Die Rolloanordnung umfaßt zwei nebeneinander angeordnete Rollos mit zwei Wickelrollen und zwei Rollobahnen. Zur Anpassung an eine Querwölbung der Dachkontur sind die Wikkelwellen unter einem stumpfen Winkel zueinander angeordnet.

Aufgabe der Erfindung ist es, eine eingangs genannte Sonnenschutzeinrichtung mit einer größeren Flexibilität bei ihrer Nutzung zu schaffen.

Diese Aufgabe wird bei der gattungsgemäßen Sonnenschutzeinrichtung erfindungsgemäß dadurch gelöst, daß das Sonnenschutzelement sowohl in einer zumindest teilweise ausgefahrenen Stellung wie auch in einer eingefahrenen Stellung verschiebbar ist. Das Sonnenschutzelement kann somit in seinem eingefahrenen Zustand, wenn statt einer Abschattung eine möglichst unbehinderte Sicht erwünscht ist, an eine für diesen Zweck günstige Position verschoben werden. Jedoch kann das Sonnenschutzelement auch in einer teilweise oder gänzlich ausgefahrenen Stellung verschoben werden, wobei sich dann seine ausgefahrene Länge verkürzt oder verlängert. Die Sonnenschutzeinrichtung eignet sich insbesondere für transparente Dachteile, kann jedoch auch für Seitenfenster und Front- oder Heckscheiben verwendet werden.

Vorteilhafte Ausgestaltungen der Erfindung sind in den Unteransprüchen angegeben.

Bevorzugt ist das Sonnenschutzelement an einem Querträger angebracht, der in Fahrzeuglängsrichtung verschiebbar gelagert ist. Der Querträger bietet die notwendige Stabilität und geschützte Aufnahme für ein beispielsweise leicht aufgebautes Sonnenschutzelement sowie eine optische Abdeckung. Der Querträger kann somit als verschiebbares Dachhimmelteil gebildet sein.

Wenn ein zweites ausfahrbares Sonnenschutzelement für einen vom ersten Sonnenschutzelement unbedeckten Teil des Dachausschnitts vorgesehen ist und entweder am Vorderrand bzw. Hinterrand des Dachausschnitts oder an dem Querträger gelagert ist, so können wahlweise unterschiedliche Einstellungen der Abschattung für den vorderen und den hinteren Fahrzeuginnenraum vorgenommen werden.

Wenn auch ein Antrieb zum Verschieben des Sonnenschutzelements bzw. des Querträgers vorgesehen sein kann, so ist auch eine manuelle Verschiebung als Alternative möglich.

Ebenso kann das Aus- und Einfahren des bzw. der Sonnenschutzelemente durch einen Antrieb wie auch manuell erfolgen.

Neben unterschiedlichen, gestuften oder stufenlosen Zwischenstellungen kann das verschiebbar gelagerte Sonnenschutzelement bzw. der Querträger an den Vorderrand und an den Hinterrand des Dachabschnitts verschiebbar sein.

Wenn zumindest ein Sonnenschutzelement in Dachquerrichtung in zumindest zwei unabhängige Sonnenschutzteilelemente unterteilt ist, so kann die Abschattung flexibler eingestellt werden.

Zweckmäßigerweise ist der Querträger sowohl bei ausgefahrenen, den Dachabschnitt abdeckenden Sonnenschutzelementen wie auch bei am Querträger aufgenommenen, den Dachabschnitt freigebenden Sonnenschutzelementen verschiebbar.

In einer bevorzugten Ausgestaltung ist der Querträger mit den daran gelagerten Sonnenschutzelementen an eine Dachquerwölbung angepaßt. Der mittlere Bereich ist dann nach oben versetzt, so daß der Kopfraum der Insassen durch den Querträger und die Sonnenschutzelemente nicht beeinträchtigt ist. Dies ist insbesondere bei stark gewölbten Dächern vorteilhaft. Der Querträger kann zwei Schenkel enthalten und der Mittelabschnitt des Querträgers kann bezüglich des Fahrzeuginnenraumes höher angeordnet sein wie die äußeren, verschiebbar gelagerten Schenkelenden.

Um die Vorteile des erhöhten Mittelbereichs zu nutzen, enthält dann zweckmäßigerweise jeder Schenkel des Querträgers ein Sonnenschutzteilelement.

Bevorzugt ist der Querträger an seitlichen Führungsschienen am Fahrzeugdach verschiebbar gelagert.

Für eine variable Verwendung insbesondere bei geöffnetem Dach ist es zweckmäßig, wenn der Querträger mit den Sonnenschutzelementen als Einheit aus seiner Anordnung vom Fahrzeugdach entnehmbar ist.

Vorzugsweise ist zumindest eines der Sonnenschutzelemente oder der Sonnenschutzteilelemente ein ausziehbares Rollo oder eine Jalousie.

Der Dachabschnitt kann ein festes Glasdach oder Kunststoffdach sein oder zumindest einen öffnungsfähigen transparenten Deckel aufweisen.

Nachfolgend werden Ausführungsbeispiele der Sonnenschutzeinrichtung unter Bezugnahme auf Zeichnungen näher erläutert. Es zeigt:
- Fig. 1: in einem Längsschnitt in schematischer Darstellung ein Fahrzeugdach mit einem transparenten Dachabschnitt und mit einer Sonnenschutzeinrichtung;
- Fig. 2: in einem Längsschnitt das Fahrzeugdach mit nach hinten verschobener Sonnenschutzeinrichtung und geöffneten Deckeln des Daches;
- Fig. 3: in einem Querschnitt das Fahrzeugdach mit der Sonnenschutzeinrichtung; und
- Fig. 4: in einem Längsschnitt das Fahrzeugdach mit einer weiteren Ausführungsform der Sonnenschutzeinrichtung.

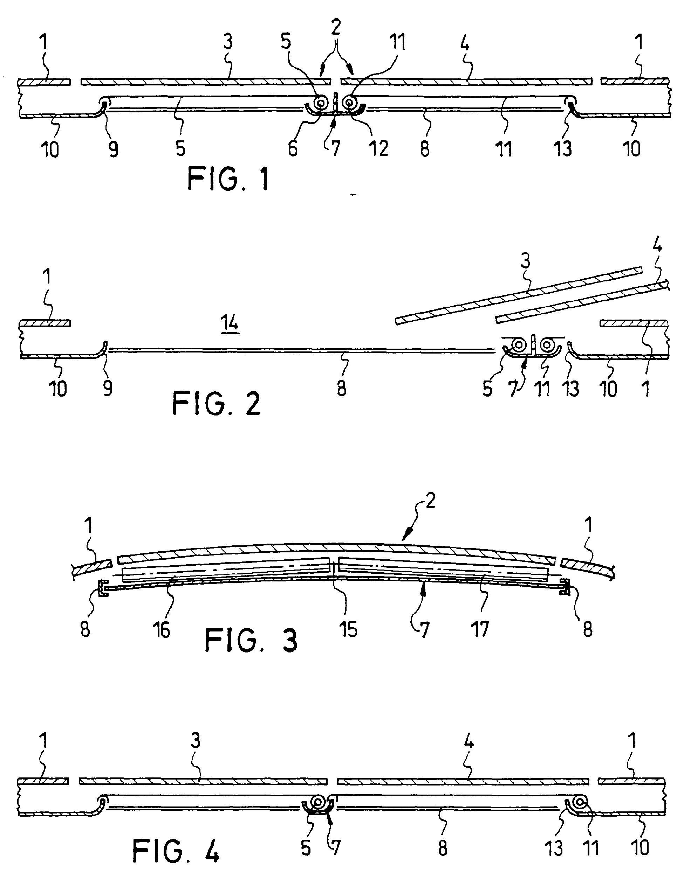

Ein Fahrzeugdach eines Personenkraftwagens mit einer festen Dachhaut 1 enthält einen transparenten Dachabschnitt 2, der beispielsweise als Schiebehebedach oder Spoilerdach mit zwei hintereinander angeordneten und zu öffnenden Glasdeckeln 3 und 4 gebildet ist oder auch ein fest eingebautes Glasdach sein kann. Eine Sonnenschutzeinrichtung zum zumindest teilweisen unterseitigen Abdecken des Dachabschnitts 2 bzw. der Glasdeckel 3, 4 enthält ein Rollo 5 als ausfahr- oder ausziehbares Sonnenschutzelement, dessen Wickelachse 6 an einem Querträger 7 drehbar gelagert ist. Der Querträger 7 erstreckt sich über die Breite des Dachabschnitts 2 und ist an seitlichen Längsführungsschienen 8 in Fahrzeug- oder Dachlängsrichtung verschiebbar gelagert und in unterschiedlichen Positionen in Längsrichtung festlegbar. Das Rollo 5 kann aus einer geöffneten Stellung, in der es vollständig aufgewickelt und am Querträger 7 untergebracht ist, abgewickelt und nach vorne zu einem Vorderrand 9 des Dachabschnittes 2 ausgefahren oder ausgezogen werden (siehe Fig. 1). Der Vorderrand 9 des vom Innenraum her durchsichtigen Dachabschnittes 2 ist beispielsweise von einem Himmel 10 gebildet, der einen freien Dachausschnitt unterhalb des transparenten Dachabschnitts 2 begrenzt. Das Ausfahren oder Ausziehen des Rollos 5 kann manuell oder mittels eines nicht dargestellten Antriebs erfolgen, der beispielsweise am Vorderende des Rollos 5 angeordnete seitliche Zapfen bewegt, die an den Längsführungsschienen 8 geführt sind.

Ein zweites Rollo 11 ist mittels seiner Wickelachse 12 am Querträger 7 drehbar und zum Hinterrand 13 des Dachabschnittes 2 ausfahrbar oder ausziehbar angeordnet. Auch hier kann der Hinterrand 13 von dem Himmel 10 gebildet sein und das Ausziehen oder Ausfahren kann manuell oder über einen Antrieb erfolgen.

Der Querträger 7 kann mittels manueller Bedienung oder mittels eines Antriebs an den Längsführungsschienen 8 bei geöffnetem oder geschlossenem Rollo 5, 11 verschoben oder verlagert werden, beispielsweise aus der in Fig. 1 dargestellten Mittenstellung an den Hinterrand 13 des Dachabschnitts 2 bzw. des freien Dachausschnitts (siehe Fig. 2). Wenn der Querträger 7 bei ausgezogenen, geschlossenen Rollos 5, 11 verschoben wird, so wickelt sich beim nach hinten gerichteten Verschieben das vordere Rollo 5 ab, während sich das hintere Rollo 11 aufwickelt.

In der in Fig. 2 dargestellten Position ist der Querträger 7 mit den beiden aufgewickelten Rollos 5, 11 in seiner hinteren Stellung, so daß der Dachausschnitt unbedeckt ist. Die beiden Glasdeckel 3 und 4 sind in hinten angehobener Spoilerstellung nach hinten übereinander gefahren und geben eine große Dachöffnung 14 frei. Wenn ein hinterer Abschnitt des Dachausschnitts gegen Sonneneinstrahlung abgedeckt werden soll, so wird der Querträger 7 um die entsprechende Wegstrecke nach vorne verschoben, wobei entweder das Ende des hinteren Rollos 11 vor dem Verschieben am Hinterrand 13 befestigt wird und das Rollo 11 beim Verschieben des Querträgers 7 abgewickelt wird oder das Rollo 11 nach dem Verschieben des Querträgers 7 abgewickelt wird.

Fig. 3 zeigt eine Ausführungsform, bei der der Querträger 7 an die Querwölbung des Dachabschnittes 2 bzw. der Glasdeckel 3, 4 angepaßt ist und eine gebogene Form mit einem bezüglich dem Fahrzeuginnenraum und gegenüber den seitlichen Führungsschienen höher angeordneten Mittelabschnitt 15 aufweist. Beim Verschieben des Querträgers 7 wird der freie Kopfraum der Fahrzeuginsassen weniger beeinträchtigt wie bei einem im wesentlichen geraden Querträger 7. Der Querträger 7 kann auch zwei in etwa lineare Schenkel aufweisen, die an ihrem inneren Mittelabschnitt 15 unter einem Winkel von weniger als 180° miteinander verbunden sind.

Für eine bessere Anpassung an den gebogenen oder gewinkelten Querträger 7 ist das vordere und das hintere Sonnenschutzelement bzw. das jeweilige Rollo 5, 11 über die Breite des Dachabschnitts 2 in zwei Teilrollos 16 und 17 unterteilt (siehe Fig. 3), die gemeinsam oder voneinander unabhängig zu bedienen sind.

Gemäß einer weiteren Ausführungsform (siehe Fig. 4) ist das zweite Rollo 11 am Hinterrand 13 des hinteren Himmels 10 angeordnet. Das Rollo 11 kann ausgezogen werden und am Querträger 7 befestigt werden, so daß durch weiteres Verschieben des Querträgers 7 das hintere Rollo 11 weiter ausgefahren wird.

In dem beschriebenen Ausführungsbeispiel sind als Sonnenschutzelemente die Rollos 5 und 11 vorgesehen. Jedoch können statt ausziehbarer Rollos mit einer kontinuierlichen Plane auch Jalousien, lamellenartige Sonnenschutzelemente oder dergleichen verwendet werden.

Das Sonnenschutzelement bzw. das Rollo kann auch selbst an den seitlichen Längsführungsschienen verschiebbar gelagert sein, so daß ein eigenständiger Querträger nicht erforderlich ist und dessen Funktion von dem Sonnenschutzelement bzw. dem Rollo selbst übernommen wird.

Der Querträger 7 ist als Einheit mit dem oder den Rollos 5, 11 aus der Dachöffnung entnehmbar.

### Bezugszeichenliste

- 1: Dachhaut
- 2: Dachabschnitt
- 3: Glasdeckel
- 4: Glasdeckel
- 5: Rollo
- 6: Wickelachse
- 7: Querträger
- 8: Längsführungsschiene
- 9: Vorderrand
- 10: Himmel
- 11: Sonnenschutzelement, Rollo
- 12: Wickelachse
- 13: Hinterrand
- 14: Dachöffnung
- 15: Mittelabschnitt
- 16: Teilrollo
- 17: Teilrollo

## Patentansprüche

1. Sonnenschutzeinrichtung für ein transparentes Fahrzeugteil, insbesondere für ein Fahrzeugdach mit einem transparenten Dachabschnitt (2), wobei die Sonnenschutzeinrichtung (5) zumindest ein an dem Fahrzeugteil bzw. unter dem Dachabschnitt (2) angeordnetes und zu einem Vorderrand (9) oder zu einem Hinterrand (13) des Fahrzeugteils bzw. eines Dachausschnitts (14) ausfahrbares Sonnenschutzelement (5) enthält, das in Fahrzeuglängsrichtung verschiebbar gelagert ist,
**dadurch gekennzeichnet,**
**daß** das Sonnenschutzelement (5) sowohl in einer zumindest teilweise ausgefahrenen Stellung wie auch in einer eingefahrenen Stellung verschiebbar ist.

2. Sonnenschutzeinrichtung nach Anspruch 1,
**dadurch gekennzeichnet, daß** das Sonnenschutzelement (5) an einem Querträger (7) angebracht ist, der in Fahrzeuglängsrichtung verschiebbar gelagert ist.

3. Sonnenschutzeinrichtung nach Anspruch 1 oder 2,
**dadurch gekennzeichnet, daß** ein zweites ausfahrbares Sonnenschutzelement (11) für einen vom ersten Sonnenschutzelement (5) unbedeckten Teil des Dachausschnitts (14) vorgesehen ist und entweder am Vorderrand (9) bzw. Hinterrand (13) des Dachausschnitts oder an dem Querträger (7) gelagert ist.

4. Sonnenschutzeinrichtung nach einem der Ansprüche 1 bis 3,
**dadurch gekennzeichnet, daß** ein Antrieb zum Verschieben des Sonnenschutzelements (5, 11) bzw. des Querträgers (7) vorgesehen ist.

5. Sonnenschutzeinrichtung nach einem der Ansprüche 1 bis 4,
**dadurch gekennzeichnet, daß** das Aus- und Einfahren des bzw. der Sonnenschutzelemente (5, 11) durch einen Antrieb erfolgt.

6. Sonnenschutzeinrichtung nach einem der Ansprüche 1 bis 5,
**dadurch gekennzeichnet, daß** das verschiebbar gelagerte Sonnenschutzelement (5) bzw. der Querträger (7) an den Vorderrand (9) und an den Hinterrand (11) des Dachabschnitts (2) verschiebbar ist.

7. Sonnenschutzeinrichtung nach einem der Ansprüche 1 bis 6,
**dadurch gekennzeichnet, daß** zumindest ein Sonnenschutzelement (5, 11) in Dachquerrichtung in zumindest zwei unabhängige Sonnenschutzteilelemente (16, 17) unterteilt ist.

8. Sonnenschutzeinrichtung nach einem der Ansprüche 2 bis 7,
**dadurch gekennzeichnet, daß** der Querträger (7) sowohl bei ausgefahrenen, den Dachabschnitt (2) abdeckenden Sonnenschutzelementen (5, 11) wie auch bei am Querträger (7) aufgenommenen, den Dachabschnitt (2) freigebenden Sonnenschutzelementen (5, 11) verschiebbar ist.

9. Sonnenschutzeinrichtung nach einem der Ansprüche 2 bis 8,
**dadurch gekennzeichnet, daß** der Querträger (7) mit den daran gelagerten Sonnenschutzelementen (5, 11) an eine Dachquerwölbung angepaßt ist.

10. Sonnenschutzeinrichtung nach einem der Ansprüche 1 bis 9,
**dadurch gekennzeichnet, daß** der Querträger (7) zwei Schenkel enthält und der Mittelabschnitt (15) des Querträgers (7) bezüglich des Fahrzeuginnenraumes höher angeordnet ist wie die äußeren, verschiebbar gelagerten Schenkelenden.

11. Sonnenschutzeinrichtung nach Anspruch 10,
**dadurch gekennzeichnet, daß** an jedem Schenkel des Querträgers (7) ein Sonnenschutzteilelement (16, 17) angeordnet ist.

12. Sonnenschutzeinrichtung nach einem der Ansprüche 1 bis 11,
**dadurch gekennzeichnet, daß** der Querträger (7) an seitlichen Führungsschienen (8) am Fahrzeugdach verschiebbar gelagert ist.

13. Sonnenschutzeinrichtung nach einem der Ansprüche 1 bis 12,
**dadurch gekennzeichnet, daß** der Querträger (7) mit den Sonnenschutzelementen (5, 11) als Einheit aus seiner Anordnung vom Fahrzeugdach entnehmbar ist.

14. Sonnenschutzeinrichtung nach einem der Ansprüche 1 bis 13,
**dadurch gekennzeichnet, daß** zumindest eines der Sonnenschutzelemente (5, 11) oder Sonnenschutzteilelemente (16, 17) ein ausziehbares Rollo (5, 11) oder eine Jalousie ist.

15. Fahrzeugdach mit einer Sonnenschutzeinrichtung nach einem der Ansprüche 1 bis 14,
**dadurch gekennzeichnet, daß** der Dachabschnitt (2) ein festes Glasdach ist.

16. Fahrzeugdach nach Anspruch 15,
**dadurch gekennzeichnet, daß** der Dachabschnitt (2) zumindest einen öffnungsfähigen transparenten Deckel (3, 4) aufweist.
